# EUROPÄISCHE PATENTSCHRIFT

(11) **EP 0 785 125 B1**
(45) Veröffentlichungstag und Bekanntmachung des Hinweises auf die Patenterteilung: **23.05.2001**
(21) Anmeldenummer: 97100083.1
(22) Anmeldetag: 04.01.1997
(51) Int. Cl.: B62J 1/06

(54) **Vorrichtung zur externen Sicherung gegen Verdrehung, zur Ausfahrbegrenzung und zur Diebstahlsicherung einer hydraulisch positionierbaren Sattelstütze**
Anti-rotation safety device and anti-theft device, limiting the extraction of an hydraulically adjustable seat past
Dispositif anti-rotation et antivol pour limiter l'extraction d'un support de selle ajustable hydrauliquement

(30) Priorität: 18.01.1996 DE 19601635
(43) Veröffentlichungstag der Anmeldung: 23.07.1997
(73) Patentinhaber: Schröder, Günter, Dr.-Ing., 66780 Siersburg (DE)
(72) Erfinder: Schröder, Günter, Dr.-Ing., 66780 Siersburg (DE)

(56) Entgegenhaltungen:
- FR-A- 444 530
- US-A- 4 736 983
- US-A- 5 156 031

## Beschreibung

Die Erfindung betrifft eine Vorrichtung zur externen Sicherung gegen Verdrehung und zur Ausfahrbegrenzung einer hydraulisch positionierbaren Stütze eines Sattels für ein Fahrrad nach DPA 195 41 760.

### Beschreibung des Stands der Technik

Üblicherweise sind Fahrradsättel auf einer im Sitzrohr geführten Sattelstütze mit Hilfe einer Verschraubung festgeklemmt, und die Sattelstütze ist im Sitzrohr höhenfest und verdrehsicher fixiert. In der Fahrt sind derartige Sättel nicht in der Höhe verstellbar, obwohl Höhenverstellung während der Fahrt aus ergonomischen und Sicherheits-Gründen wünschenswert ist. Es wurden daher mehrere Vorrichtungen entwickelt und bekanntgemacht, mit deren Hilfe eine Sattelstütze im Innern des Sitzrohres von Fahrradrahmen während der Fahrt in der Höhe verstellt werden kann. Bei allen Vorrichtungen besteht das Problem, die längs der Längs-Achse des Sitzrohres verschiebbaren Sattelstützen gegen Verdrehung um diese Achse zu sichern.

Aus der DE-PS 651 151 ist es bekannt, den oberen Teil der Sattelstütze als Sechskant auszuführen, um die Verdrehsicherung zu erbringen. Eine diesem Patent gemäß zu fertigende Sattelstütze kann nicht aus einfachem Rohr hergestellt werden und würde in ihrem Aufbau sehr teuer werden. Sie hat wegen der am oberen Ende des Zylinders erforderlichen Führung des Sechskants durch ein auf den Zylinder montiertes Führungslager auch eine Vergrößerung der Sattelhöhe bei tiefster Sattelstellung zur Folge, wodurch die Erfüllung eines der Erfindungsziele, nämlich beide Füße auf den befahrenen Boden zu bringen, wesentlich abgeschwächt wird.

Aus der US 5 370 351 ist eine Stoßdämpfervorrichtung für einen Fahrradsattel bekannt. In dieser Vorrichtung wird die Sattelstütze gegen Verdrehung um ihre eigene Achse dadurch gesichert, daß ein die Stütze quer durchdringender Stab (dort: 23) in seinen beiden Enden durchbohrt ist, und diese Bohrungen von zwei zur Sattelstütze parallelen Stäben (dort: 24) durchdrungen sind, die fest zwischen zwei Endplatten (dort: 21 und 22) geführt sind. Die Länge des Verfahrwegs der Sattelstütze ist durch den Abstand der beiden Endplatten bestimmt, deren untere (dort: 21) fest mit der seat tube, also dem Sitzrohr des Rahmens, verbunden ist. Damit ergäbe sich eine Tiefststellung des Sattels oberhalb des Deckels 205 (in DPA 195 41 760) von der Länge L = Verstellweg der Sattelstütze + Summe der Bauteillängen der Vorrichtung nach US 5 370 351. Da der Verstellweg der Sattelstütze nach DPA 195 41 760 bis zu 150 mm reicht und für die Summe der Bauteillängen nach US 5 370 351 mindestens 40 mm anzusetzen sind, würde eine Sattelverstellvorrichtung nach DPA 195 41 760 mit einer Verdrehsicherung nach US 5 370 351 den Sattel mindestens 190 mm oberhalb des Deckels 205 in der Tiefststellung positionieren. Diese Art der Verdrehsicherung führt nicht zu dem Ziel der DPA 195 41 760, eine Sattelverstellung zu schaffen, die in vorhandene Räder einbaubar ist und den Sattel möglichtst tiefst absenken soll.

Aus der DE 40 31 273 A ist ebenfalls eine Außenführung für ein stoßdämpfendes Teleskoprohr bekannt. Diese Aussenführung ist in ihrer technischen Ausführung nicht näher beschrieben. Aus der Zeichnung ist zu erkennen, daß es sich um ein Führungselement handelt, das aus einem Kolben besteht, der in einen unten verschlossenen Zylinder eintaucht und ausfährt und eine Verdrehung der längsaxial zueinander bewegten Teile des Teleskoprohres sicher verhindert. Dieses Führungselement ist aber nicht geeignet, das Ausfahren des Teleskops zu begrenzen.

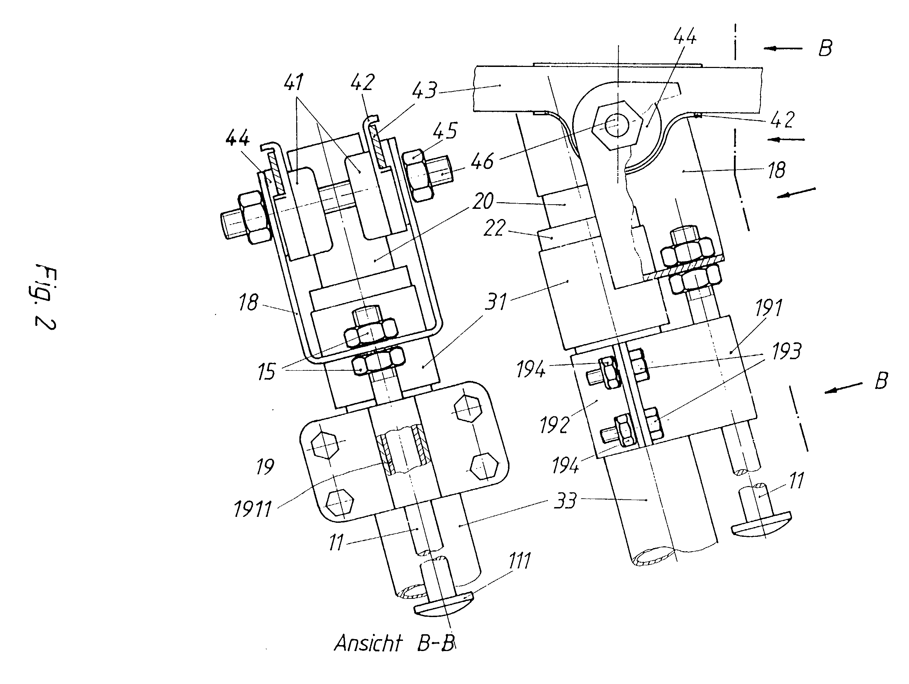

In der US 4 736 983 A ist eine Verdrehsicherung für eine gefederte Sattelstütze beschrieben, der gemäß die Sattelstütze eine längsachsial verlaufende Nut aufweist, in die eine Feder eingreift, die sich auf der Innenseite des Führungsrohres, in dem die Sattelstütze geführt wird, befindet. Eine ähnliche Nut-und-Feder-Führung ist für die Sicherung des Kolbens gegen Verdrehung um die gemeinsame Längsachse von Kolben von mir in der DPA 195 42 760 angeführt worden, wie dort in Fig. 2 gezeigt. Sie hat sich in den folgenden Versuchen aber nicht bewährt und und bereitete erhebliche Herstellungsprobleme.Diese Art einer Verdrehsicherung ist für die Sattelstütze nach DPA 195 41 760 daher nicht brauchbar.

In US 5 156 031 wird eine Sicherung beschrieben, mit der unerlaubter Abbau des Sattels von der Sattelstütze durch Lösen der den Sattel auf der Sattelstütze klemmenden Schraube verhindert wird. Dieses Problem stellte sich mir bisher nicht und ist auch nicht Gegenstand meiner Erfindungen.

In der Patentschrift FR 444 530 A wird eine Vorrichtung beschrieben, gemäß der bei einem abgestellten Fahrrad durch Hochkippen des Sattels um eine an der Sattelstütze befestigten Achse, die vertikal zur Hauptebene des Fahrradrahmens, also quer zur Fahrtrichtung, steht, ein Bremsbelag auf den hinteren Reifen gedrückt wird, um das abgestellte Fahrrad durch eine Feststellbremse an ungewollter Bewegung zu hindern. Es ist nicht Ziel der eigenen Überlegungen dieses Problem zu lösen. Ziel der eigenen Überlegungen ist es, die Drehung des auf dem Kolben meiner Vorrichtung zur Höhenverstellung eines Fahrradsattels befestigten Sattels um die Längsachse von Kolben und Zylinder infolge der Drehmomente, die der auf dem Sattel sitzende und die Kurbeln des Rades tretende Radfahrer über den Sattel auf den Kolben ausübt, zu verhindern.

### Beschreibung der eigenen Erfindung

Der Erfindung liegt die Aufgabe zugrunde, eine Vorrichtung der eingangs beschriebenen Art zu schaffen, die einfach zu fertigen und robust ist, und eine damit kombinierte Höhenbegrenzung der Sattelverstellung bietet.
Bei der Ausbildung gemäß DPA 195 41 760 ist die Aufnahme des Führungselements 204 in dem oben am Hohlkörper befindlichen Deckel 205 vorgesehen. Für nicht-kreisrunde Querschnitte des Stützrohrs ist dieses sinnvoll und erforderlich. Bei kreisrunden Querschnitten des Stützrohrs aber stellt die topfartige Erweiterung eine erhebliche Verteuerung der Herstellung des Hohlkörpers und eine schon oben erwähnte Erhöhung der Sattel-Tiefst-Stellung dar. Mit der hier beschriebenen externen Verdrehsicherung wird die Möglichkeit geschaffen, den hydraulisch höhenpositionierbaren Sattel in seiner Ausrichtung in der Fahrradrahmenebene auch bei größeren Drehmomenten um die Längs-achse der Sattelstütze zu stabilisieren und die oben beschriebenen Mängel zu beseitigen. Sie bietet zugleich die Möglichkeit, den Ausschub des Stützrohrs sicher zu begrenzen und damit die höchste Sattelstellung problemfrei festzulegen.

Die Aufgabe der Erfindung wird durch die im Kennzeichen des Anspruchs 1 genannten Merkmale gelöst.

Eine vorteilhafte Ausgestaltung der Erfindung wird im Anspruch 2 offenbart.

Eine weitere vorteilhafte Ausgestaltung der Erfindung wird im Anspruch 3 ausgeführt.

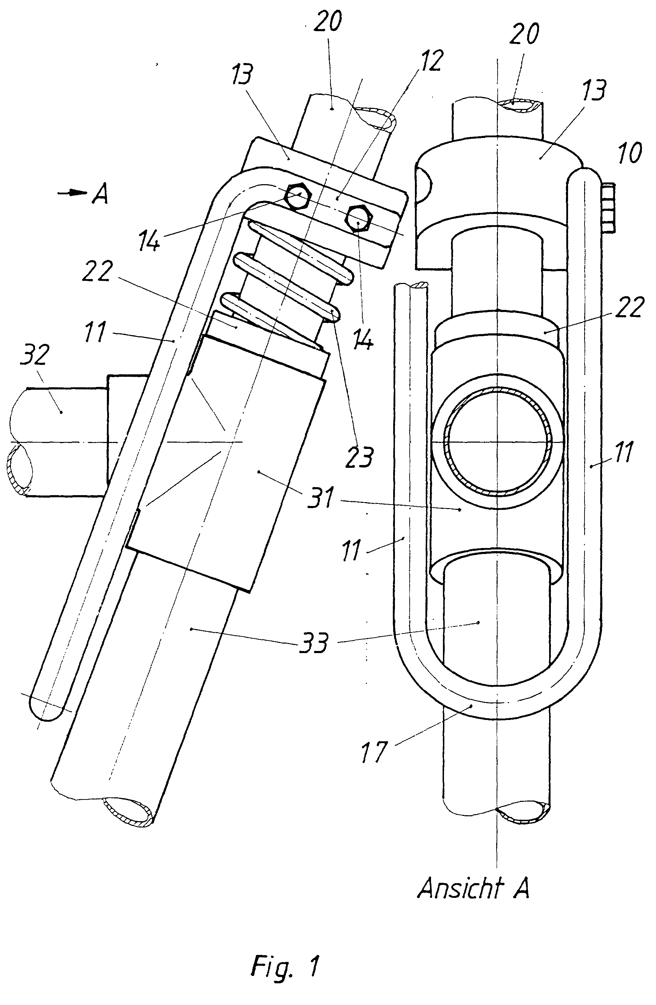

Fig. 1 zeigt die Vorrichtung, eingebaut in einen geschlossenen Fahrradrahmen, in zwei Ansichten. Links ist die Ansicht auf die linke Seite des Fahrrades dargestellt. Im rechten Teil der Darstellung ist die Vorrichtung von vorn gesehen dargestellt.

Fig. 2 zeigt die Vorrichtung, eingebaut in einen offenen Fahrradrahmen, in zwei Ansichten. Im oberen, bei quergelegten Blatt rechten Teil ist die Ansicht auf die rechte Seite des Fahrrades dargestellt. Die strich-punktierte Linie markiert die zwei Ebenen, in der die Vorrichtung in den Blickrichtungen "B" in der "Ansicht B - B" in nur einer Ebene dargestellt ist.

Im folgenden werden zunächst zwei Ausführungen der erfindungsgemäßen Vorrichtung beschrieben, aus denen die direkte und die indirekte Abstützung des auf die nicht geklemmte, sondern nur auf der Druckflüssikeit im Zylinder aufliegenden Stütze 20 wirkenden Drehmoments am Rahmen erkennbar ist. Die Figuren 1 und 2 zeigen die beschriebenen Ausführungen.

Für *geschlossene* Fahrradrahmen wird die Erfindung so ausgebildet, daß die Vorrichtung 10 als u-förmiger Bügel mit nach oben weisenden Schenkeln ausgeführt wird. Ein Beispiel der erfindungsgemäßen Lösung ist in Figur 1 gezeigt. Die geraden Stäbe 11 bilden die Schenkel des "U". Die Schenkel sind parallel zur Längsachse des hinteren Schrägrohres 33 des Fahrradrahmens ausgerichtet und liegen mit dem sie verbindenden Bogen 17 in einer Ebene, die senkrecht zur Hauptebene des Fahrradrahmens steht. Der u-förmige Bügel umfaßt mit Schenkel und Bogen das Querrohr 32 des Fahrradrahmens und ist über stabile Zwischenglieder an der Stütze 20 oder am Sattelunterbau befestigt. Der Anschlag der Schenkel am Querrohr 32 begrenzt die Verdrehung von Stütze und Sattel, und der Anschlag des Bogens 17 an das Querrohr 32 begrenzt das Ausfahren der Stütze 20, legt damit die Höchststellung des Sattels fest und erschwert den Diebstahl des Zusammenbaus von künftigen, niedriger bauenden Fahrradrahmen zur Dämpfung des Anschlags von Sattel und Stütze vor Erreichen der Tiefststellung vorteilhaft angewendet werden kann.

Für *offene* Fahrradrahmen wird die Erfindung so ausgebildet, daß die Vorrichtung 10 mit mindestens einem geraden Stab 11 ausgeführt, der in einer direkt oder indirekt am Sitzrohr befestigten Buchse geführt wird. und der an seinem unteren Ende so ausgebildet ist, daß er nicht durch die Buchse nach oben gezogen werden kann. Im Falle zweier Stäbe sind die derart miteinander verbunden, daß auch sie nicht nach oben aus den Buchsen gezogen werden können. Ein Beispiel der erfindungsgemäßen Lösung ist in Figur 2 gezeigt. Der gerade Stab 11 ist parallel zur Längsachse des hinteren Schrägrohres 33 des Fahrradrahmens ausgerichtet, liegt in der Hauptebene des Fahrradrahmens, in der er die Führungsbuchse 1911 des am hinteren Schrägrohr 33 befestigten Führungsfittings 19 durchdringt, und ist über stabile Zwischenglieder an der Stütze 20 oder, wie in Figur 2 gezeigt, am Sattelunterbau befestigt. Der Anschlag des Stabes 11 an die Innenwand der Führungsbuchse 1911 begrenzt die Verdrehung von Stütze und Sattel, und der Anschlag des Kopfes 111 an das Führungsteil 191 begrenzt das Ausfahren der Stütze 20, legt damit die Höchststellung des Sattels fest und erschwert den Diebstahl des Zusammenbaus von Sattel und Stütze.

## Patentansprüche

1. Vorrichtung zur externen Sicherung gegen Verdrehung, zur Ausfahrbegrenzung und zur Diebstahlsicherung einer hydraulisch positionierbaren Stütze (20) eines Sattels für ein Fahrrad,
**dadurch gekennzeichnet, daß**
a) mindestens ein gerader Stab (11) mit einem ersten Ende an der Stütze (20) oder am Sattel befestigt ist,
b) die Längsachse des mindestens einen geraden Stabes (11) parallel zur Längsachse der Stütze (20) ausgerichtet ist,
c) das zweite Ende des mindestens einen Stabes (11) mit dem Fahrradrahmen derart zusammenwirkt, daß ohne Trennung der Befestigung des ersten Endes von der Stütze (20) oder vom Sattel die Stütze nicht vom Fahrrad getrennt werden kann.

2. Vorrichtung nach Anspruch 1, dadurch gekennzeichnet, daß
zwei gerade Stäbe (11) vorgesehen sind, die mittels eines Bogens (17) u-förmig verbunden sind, wobei die Stäbe (11) mit dem Bogen (17) das Querrohr (32) und / oder den Befestigungsfitting (31) für das Querrohr (32) eines geschlossenen Fahrradrahmens umfassen.

3. Vorrichtung nach Anspruch 1, dadurch gekennzeichnet, daß
a) nur ein gerader Stab (11) vorgesehen ist,
b) das zweite Ende des geraden Stabes (11) eine Verdickung aufweist,
c) der gerade Stab (11) in einer Buchse eines Führungsteils (191) geführt wird,
d) das Führungsteil (191) am hinteren Schrägrohr (33) eines offenen Fahrradrahmens befestigt ist,
e) die Verdickung größer als der Durchmesser der Buchse ist.

## Claims

1. Device for external securing against rotation, for limiting of the stroke and for securing against theft of a hydraulically positionable seat post of a saddle for a bicycle, characterized by
a) at least one straight rod (11) is connected to seat post (20) or to the saddle with its first end;
b) the axis of at least one straight rod (11) is directed parallel to the axis of seat post (20);
c) the second end of at least one of the rods (11) acts together with the frame in a way, that seat tube (20) cannot be separated from the bicycle without separating the first end of the rod from the seat post (20) or from the saddle.

2. Device of claim 1, characterized by
two straight rods (11) u-shape like connected by a bow (17), wherein the rods (11) together with bow (17) encircle the tube (32) and / or the fitting (31) of a dosed bicycle frame.

3. Device of claim 1, characterized by
a) only one straight rod (11) is provided;
b) the second end of straight rod (11) is thickened;
c) the straight rod (11) is guided in a bush of guide part (191);
d) the guide part (191) is fixed to the rear inclined tube (33) of an open bicycle frame;
e) the thickening is wider than the diameter of the bush.

## Revendications

1. Dispositif de sécurité externe contre les torsions, de limitation de course et de protection antivol d'un support (20) à positionnement hydraulique d'une selle de bicyclette, caractérisé par le fait que
a) au moins une barre droite (11) est fixée par une première extrémité au support (20) ou à la selle,
b) l'axe longitudinal de cette barre droite (11) est dirigé parallèlement à l'axe longitudinal du support (20)
c) la seconde extrémité d'une barre (11) interagit avec le cadre de la bicyclette de telle manière que le support ne puisse être retiré de la bicyclette sans démonter la fixation de la première extrémité du support (20) ou de la selle.

2. Dispositif selon la revendication 1, caractérisé par le fait que deux barres droites sont prévues (11), reliées par un cintre (17) en forme de U, les barres (11) et le cintre (17) entourant le tube transversal (32) et/ou le raccord de fixation (31) du tube transversal (32) d'un cadre de bicyclette fermé.

3. Dispositif selon la revendication 1, caractérisé par le fait que
a) une seule barre droite (11) est prévue,
b) la seconde extrémité de la barre droite (11) présente un renflement,
c) la barre droite (11) est dirigée dans une douille d'un élément de guidage (191),
d) l'élément de guidage (191) est fixé au tube diagonal arrière (33) d'un cadre de bicyclette fermé,
e) le renflement est supérieur au diamètre de la douille.
